# EUROPEAN PATENT APPLICATION

(11) **EP 3 125 081 A1**
(43) Date of publication of application: **01.02.2017**
(21) Application number: 15769741.8
(22) Date of filing: 27.03.2015
(51) Int. Cl.: G06F 3/041, G03B 21/00, G03B 21/14, G06F 3/042, G09G 5/00, G09G 5/36, H04N 5/74

(54) **INFORMATION PROCESSING DEVICE, PROJECTOR, AND INFORMATION PROCESSING METHOD**

(30) Priority: 28.03.2014 JP 2014068876
(71) Applicant: Seiko Epson Corporation, Tokyo 160-8801 (JP)
(72) Inventor: KIRYU, Akira, Suwa-shi Nagano 392-8502 (JP); TONE, Takehiko, Suwa-shi Nagano 392-8502 (JP)
(74) Representative: Miller Sturt Kenyon
(86) International application number: PCT/JP2015/001778
(87) International publication number: WO 2015/146189

(57) **Abstract**

A defect of a process based on an operation which is performed across the inside and outside of a display region on which a projected image is displayed is eliminated. Provided is a projector including detection means for repeatedly detecting a position indicated by an indicator 30 with respect to a screen 40 which is a projection screen onto which an image is projected, and supplying position information of the detected position; and generation means for generating position information of a third position located between a first position within a primary screen SC1 which is a display region of the image and a second position outside the primary screen SC1, in a case where the detection means detects the first position, and then detects the second position.

## Description

### Technical Field

The present invention relates to a technique for detecting an operation which is performed by indicating a position on a projection screen of an image.

### Background Art

There are projectors having a function of detecting a position on a projection screen of an image indicated by an indicator such as a pen, and displaying a handwritten image in accordance with the detected position, or receiving an operation for selecting an object (for example, menu or icon). PTL 1 discloses a technique capable of executing a process across multiple screens during display in such a projector. PTL 1 discloses the execution of a process across a plurality of display regions in a case where images which are input from a plurality of image sources are divided and displayed by one projector.

### Citation List

### Patent Literature

PTL 1: JP-A-2013-97177

### Summary of Invention

### Technical Problem

There is a display method called a multi-monitor in which a substantial screen region is expanded by connecting a plurality of monitors to one personal computer (PC). The use of this display method allows a display region having a projected image displayed therein to be substantially expanded using a plurality of projectors. However, in a case where an operation which is performed across the inside and outside of a display region corresponding to one projector is performed, there is the possibility of a defect of a process based on the operation occurring. PTL1 does not disclose a defect of a process in a case where a plurality of projectors are used.

The invention is devised in view of such circumstances, and one of the objects thereof is to eliminate a defect of a process based on an operation which is performed across the inside and outside of a display region in which a projected image is displayed.

### Solution to Problem

In order to achieve the above object, an information processing device according to the invention includes: detection means for repeatedly detecting a position indicated by an indicator with respect to a projection screen onto which an image is projected, and supplying position information of the detected position; and generation means for generating position information of a third position located between a first position located inside of a display region of the image in the projection screen and a second position located outside of the display region, in a case where the detection means detects the first position, and then detects the second position.

According to the invention, it is possible to eliminate a defect of a process based on an operation which is performed across the inside and outside of the display region in which the projected image is displayed.

In order to achieve the above object, an information processing device according to the invention includes: detection means for repeatedly detecting a position indicated by an indicator with respect to a projection screen onto which an image is projected, and supplying position information of the detected position; and generation means for generating position information of a third position located between a first position located inside of a display region of the image and a second position located outside of the display region in the projection screen, in a case where the detection means detects the second position, and then detects the first position.

According to the invention, it is possible to eliminate a defect of a process based on an operation which is performed across the inside and outside of the display region in which the projected image is displayed.

In the invention, the detection means may detect the indicated position on the basis of image data obtained by capturing an image of an imaging region including the display region in a predetermined period, and the generation means may specify the first position and the second position on the basis of two pieces of the image data of which times of the imaging are different from each other by one period, and generate the position information of the third position.

According to the invention, it is possible to detect an operation which is performed across the inside and outside of the display region, on the basis of two pieces of image data of which the times of imaging are consecutive.

In the invention, the detection means may detect the indicated position on the basis of the image data obtained by capturing an image of the imaging region wider than the display region.

According to the invention, it is possible to detect an operation which is performed across the inside and outside of the display region by making the imaging region wider than the display region.

In the invention, the generation means may generate information indicating that the indicator moves to an outside of the display region, in association with the third position.

According to the invention, it is possible to detect the position of movement of the indicator to the outside of the display region with a good degree of accuracy.

In the invention, a first display region, as a display surface, corresponding to a first image and a second display region corresponding to a second image may be arranged in the projection screen, and the generation means may generate the position information of the third position, in a case where the first position is detected inside the first display region, and the second position is detected inside the second display region.

According to the invention, it is possible to eliminate a defect of a process based on an operation which is performed across the first display region and the second display region.

In the invention, the generation means may delete information indicating that the indicator moves to an outside of the display region, when the information corresponds to movement from the first display region to the second display region in a case where the information is supplied by the detection means.

According to the invention, it is possible to reduce the possibility of the position of movement of the indicator from the first display region to the second display region being misidentified.

In the invention, the generation means may generate information indicating that the indicator moves to the outside of the display region in association with the third position, with respect to the first display region.

According to the invention, it is possible to detect the position of movement of the indicator from the first display region to the second display region with a good degree of accuracy.

In the invention, the generation means may generate the position information of the third position with respect to the second display region.

According to the invention, it is possible to detect the position, on the second display region, of movement of the indicator from the first display region with a good degree of accuracy.

Meanwhile, the invention can be conceived as a projector, an information processing method and a program, in addition to an information processing device.

### Brief Description of Drawings

[Fig. 1] Fig. 1 is a diagram illustrating an entire configuration of a projection system according to a first embodiment of the invention.
[Fig. 2] Fig. 2 is a block diagram illustrating a hardware configuration of the projection system according to the embodiment.
[Fig. 3] Fig. 3 is a block diagram illustrating a functional configuration of the projection system according to the embodiment.
[Fig. 4] Figs. 4(a) and 4(b) are flow diagrams illustrating an interpolation process according to the embodiment.
[Fig. 5] Figs. 5(a) to 5(e) are diagrams illustrating an interpolation process relating to a primary screen according to the embodiment.
[Fig. 6] Figs. 6(a) to 6(d) are diagrams illustrating an interpolation process relating to a secondary screen according to the embodiment.
[Fig. 7] Fig. 7 is a diagram illustrating a drawing process according to the embodiment.
[Fig. 8] Fig. 8 is a block diagram illustrating a functional configuration of a projection system according to a second embodiment of the invention.
[Fig. 9] Fig. 9 is a diagram illustrating an interpolation process according to the embodiment.
[Fig. 10] Figs. 10(a) to 10(d) are diagrams illustrating an interpolation process according to the embodiment.
[Fig. 11] Figs. 11(a) to 11(c) are diagrams illustrating an example of a defect occurring in a drawing process during a two-screen display.

### Description of Embodiments

Hereinafter, embodiments of the invention will be described with reference to the accompanying drawings.

### [First Embodiment]

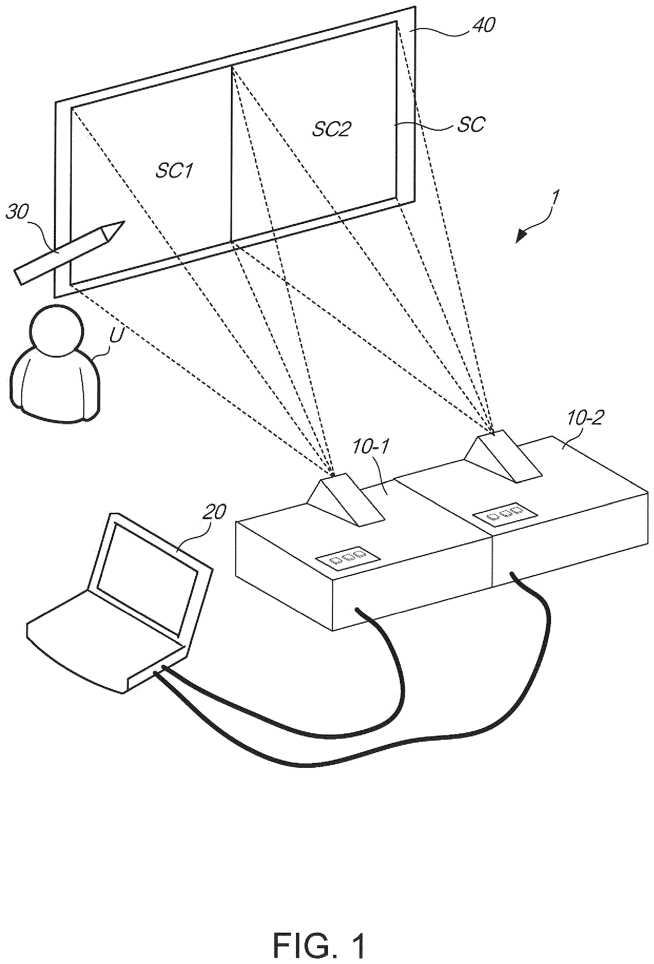

Fig. 1 is a diagram illustrating an entire configuration of a projection system 1 according to a first embodiment of the invention. The projection system 1 includes a projector 10-1, a projector 10-2, a personal computer (PC) 20, and an indicator 30.

The projectors 10-1 and 10-2 are liquid crystal projectors herein, and are disposed so as to be next to each other in a horizontal direction. The projectors 10-1 and 10-2 are projection-type display devices that project an image onto a screen 40 on the basis of an image signal which is input from the PC 20. The projectors 10-1 and 10-2 project a color image on the basis of an image signal indicating an input image corresponding to each color component of three primary colors of, for example, R(Red), G(Green), and B(Blue). The screen 40 is a reflection-type screen herein, and is a projection screen onto which an image is projected by the projectors 10-1 and 10-2.

The projector 10-1 projects a primary screen SC1 (first display region) onto the screen 40. The projector 10-2 projects a secondary screen SC2 (second display region) onto the screen 40. The primary screen SC1 is a screen corresponding to a primary monitor in a display method of a multi-monitor, and the secondary screen SC2 is a screen corresponding to a secondary monitor in a display method of a multi-monitor. Therefore, the primary screen SC1 and the secondary screen SC2 are arranged, and thus one screen region SC is displayed as a whole. In the present embodiment, the projectors 10-1 and 10-2 are assumed to be adjusted in advance so that the side of the right edge of the primary screen SC1 and the side of the left edge of the secondary screen SC2 are coincident with each other. The projectors 10-1 and 10-2 function as an information processing device that executes information processing relating to a display of the screen region SC.

In the following description, a component having a branch number of "1" attached to the end of a reference numeral is a component of the projector 10-1, and a component having a branch number of "2" attached to the end of a reference numeral is a component of the projector 10-2.

The PC 20 is an information processing device serving as a signal source (picture source) of an image signal which is input to the projectors 10-1 and 10-2. The PC 20 is communicably connected to each of the projectors 10-1 and 10-2. The PC 20 associates the projector 10-1 as a display device that displays the primary screen, and associates the projector 10-2 as a display device that displays the secondary screen, on the basis of, for example, a function of an operating system (OS).

Meanwhile, in the example of Fig. 1, the PC 20 is connected to each of the projectors 10-1 and 10-2 in a wired manner, but may be wirelessly connected thereto, and a connection system or a communication system particularly does not matter.

The indicator 30 is a pen-type device (operation device) herein, and is used by a user U in order to indicate a position on the screen 40. The indicator 30 is used by the user U, for example, in order to perform an operation for overlapping the screen region SC to handwrite characters or figures. In addition, the indicator 30 is used by the user U in order to perform an operation for selecting an operable object included in the screen region SC. The indicator 30 may be an operation device having other shapes such as a wand shape, without being limited to a pen type. In addition, the indicator 30 may not an operation device, and may be substituted by the hand, finger or the like of the user U.

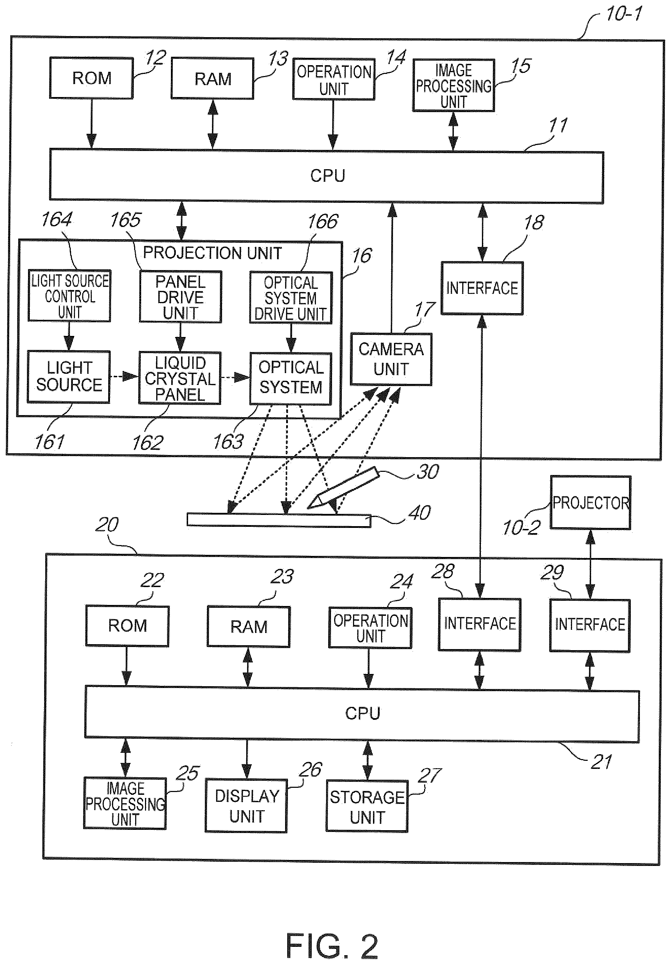

Fig. 2 is a block diagram illustrating a hardware configuration of the projection system 1. The projectors 10-1 and 10-2 executes functions depending on whether the device displays the primary screen or displays the secondary screen, but the hardware configuration thereof is common to the projectors. Hereinafter, the hardware configuration of the projector 10-1 will be representatively described.

The projector 10-1 includes a central processing unit (CPU) 11, a read only memory (ROM) 12, a random access memory (RAM) 13, an operating unit 14, an image processing unit 15, a projection unit 16, a camera unit 17, and an interface 18.

The CPU 11 is a microcomputer that controls each unit of the projector 10-1 by reading out and executing a program stored in storage means such as the ROM 12 through the RAM 13. The operating unit 14 is operation means including an operator (for example, physical key) for performing the turn-on/off of a power supply of the projector 10-1 or various types of operations.

The image processing unit 15 includes an image processing circuit such as, for example, an application specific integrated circuit (ASIC), and takes charge of image processing which is performed by the projector 10-1. The image processing unit 15 performs predetermined image processing such as resizing or keystone correction on, for example, an image signal which is input from the PC 20 to the interface 18, in accordance with control of the CPU 11.

The projection unit 16 projects an image (primary screen SC1) onto the screen 40 on the basis of an image signal after image processing performed by the image processing unit 15. The projection unit 16 includes a light source 161, a liquid crystal panel 162, an optical system 163, a light source control unit 164, a panel drive unit 165, and an optical system drive unit 166. The light source 161 is, for example, a solid-state light source including a light emitting diode (LED) or a semiconductor diode, and emits light to the liquid crystal panel 162. The liquid crystal panel 162 is, for example, a transmission-type liquid crystal panel, and is a light modulator that modulates light incident from the light source 161. The liquid crystal panel 162 is provided corresponding to each color of three primary colors of RGB. The optical system 163 includes, for example, a lens or a drive circuit for lens adjustment, and expands light (image light) modulated by the liquid crystal panel 162 to project the expanded light onto the screen 40. The light source control unit 164 drives the light source 161 in accordance with control of the CPU 11. The panel drive unit 165 drives the liquid crystal panel 162 on the basis of an image signal which is supplied from the CPU 11. The optical system drive unit 166 drives a drive circuit of the optical system 163 in accordance with control of the CPU 11.

The camera unit 17 includes an image sensor (for example, CMOS sensor or CCD sensor), and captures an image of the screen 40. In the present embodiment, the camera unit 17 captures an image of the screen 40 at the angle of view wider than a range onto which the projection unit 16 projects an image, in accordance with control of the CPU 11. That is, in the camera unit 17, a region wider than the primary screen SC1 inclusive of the entire primary screen SC1 is set to an imaging region. The interface 18 is an interface for connection to the PC 20. The interface 18 realizes a function relating to the input and output of data between the projector 10-1 and the PC 20.

The projector 10-2 projects the secondary screen SC2 onto the screen 40 through the projection unit 16. In addition, in the camera unit 17 of the projector 10-2, a region widerthan the secondary screen SC2 inclusive of the entire secondary screen SC2 is set to an imaging region.

The PC 20 includes a CPU 21, a ROM 22, a RAM 23, an operating unit 24, an image processing unit 25, a display unit 26, a storage unit 27, an interface 28, and an interface 29.

The CPU 21 is a microcomputer that controls each unit of the PC 20 by reading out and executing a program stored in storage means such as the ROM 22 through the RAM 23. The operating unit 24 is operation means including a plurality of operators (for example, physical keys) such as a keyboard or a numeric keypad. The image processing unit 25 includes an image processing circuit such as, for example, an ASIC, and performs various types of image processing in accordance with control of the CPU 21. The display unit 26 is for example, a liquid crystal display, and displays various types of image (screens) in accordance with control of the CPU 21. The storage unit 27 includes a recording medium such as, for example, a hard disk, and stores various types of data. The storage unit 27 may be any of internal storage means, external storage means or a combination thereof. The interface 28 is an interface for connection to the projector 10-1. The interface 28 realizes a function relating to the input and output of data between the projector 10-1 and the PC 20. The interface 29 is an interface for connection to the projector 10-2. The interface 29 realizes a function relating to the input and output of data between the projector 10-2 and the PC 20.

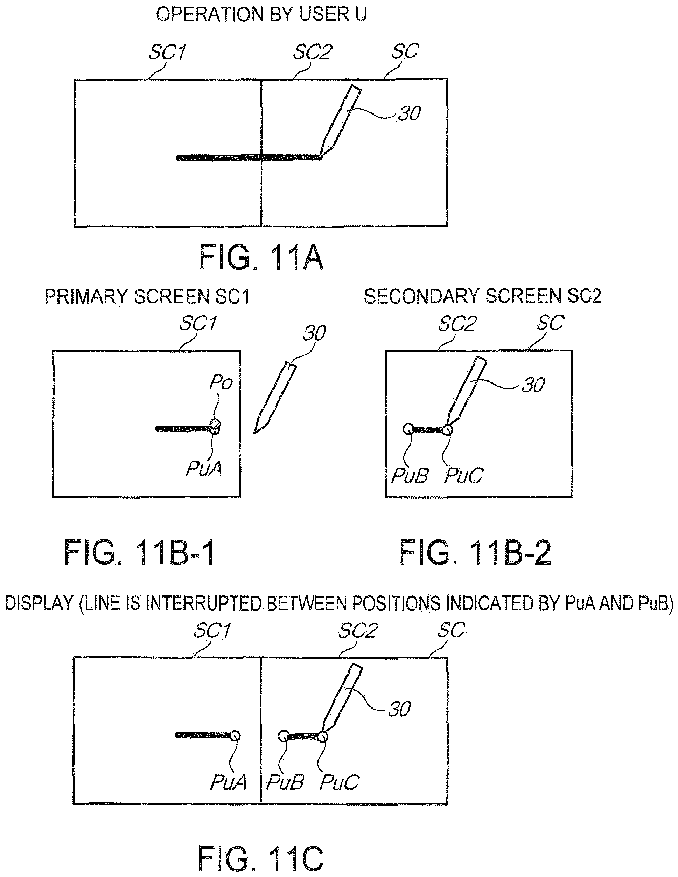

As shown in Fig. 1, in a case where a two-screen display is performed using two projectors, there is the possibility of a defect of a process described below occurring. Figs. 11A to 11C are diagrams illustrating an example of a defect occurring in a drawing process for displaying a handwritten image which is drawn by the user U.

As shown in Fig. 11(a), a case is considered in which the user U uses the indicator 30 to perform an operation for drawing a line extending across the primary screen SC1 and the secondary screen SC2. Originally, a line shown in Fig. 11(a) is to be displayed by a drawing process, but the line may be interrupted in the vicinity of a screen boundary between the primary screen SC1 and the secondary screen SC2. Subsequently, a reason of a line being interrupted in a drawing process will be described.

Generally, the projector repeatedly detects the position (typically, tip position) of the indicator 30, and supplies coordinate information of the detected position to a PC or the like that performs a drawing process. The coordinate information which is supplied by the projector is position information obtained by expressing the position of the indicator 30 in a coordinate form, and specifically includes "push information" and "pop information". The "push information" is coordinate information indicating the detected position of the indicator 30. In the drawing process, a line is drawn by linking positions indicated by two pieces of coordinate information detected temporally continuously with a line. The "pop information" is coordinate information which is supplied in a case where the position of the indicator 30 is detected in the inner side of a display region of a projected image, and then the position of the indicator 30 is not detected in the inner side of the display region. The pop information indicates, for example, the position of the indicator 30 which is finally detected in the inner side of the display region.

Hereinafter, a defect of a drawing process occurring in each of the primary screen SC1 and the secondary screen SC2 will be described.

As shown in Fig. 11(b-1), in a case where push information PuA of a position within the primary screen SC1 is detected, and then the indicator 30 moves to the outside of the primary screen SC1, pop information Po of a position indicated by the push information PuA is supplied, and the supply of coordinate information relating to the primary screen SC1 is terminated. For this reason, a line is not drawn in a region interposed between the position indicated by the push information PuA and the screen boundary of the right edge of the primary screen SC1.

As shown in Fig. 11(b-2), in a case where the indicator 30 moves to the inside of the secondary screen SC2 and the pieces of push information PuB and PuC are sequentially supplied, a line that links positions indicated by the pieces of push information PuB and PuC is drawn. However, since the push information which is initially supplied within the secondary screen SC2 is the push information PuB, a line is not drawn in a region interposed between the screen boundary of the left edge of the secondary screen SC2 and the position indicated by the push information PuB.

From the above reason, in a case where the operation of the user U described in Fig. 11(a) is performed, the drawing process shown in Fig. 11(c) is performed, and a line is interrupted in the vicinity of the boundary between the primary screen SC1 and the secondary screen SC2.

In the projection system 1, the function for eliminating the defect of the drawing process described above is realized in the projectors 10-1 and 10-2.

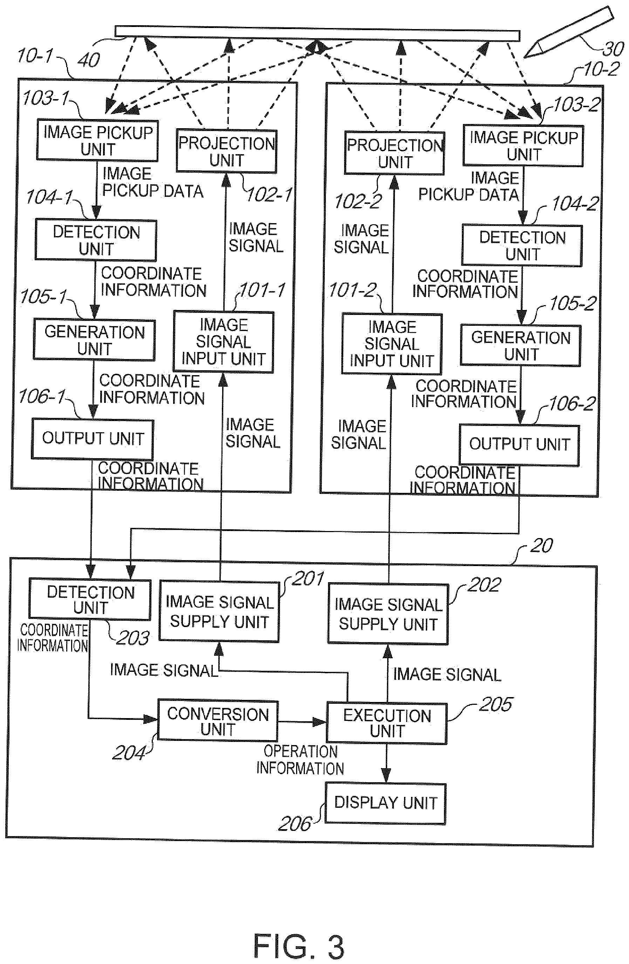

Fig. 3 is a block diagram illustrating a functional configuration of the projection system 1.

The PC 20 includes image signal supply means 201 and 202, detection means 203, conversion means 204, execution means 205, and display means 206. The projector 10-1 includes image signal input means 101-1, projection means 102-1, imaging means 103-1, detection means 104-1, generation means 105-1, and output means 106-1. The projector 10-2 includes image signal input means 101-2, projection means 102-2, imaging means 103-2, detection means 104-2, generation means 105-2, and output means 106-2.

In the PC 20, the image signal supply means 201 is means for supplying an image signal indicating an image (picture) to the projector 10-1. The image signal supply means 202 is means for supplying an image signal indicating an image (picture) to the projector 10-2. The image signal supply means 201 and 202 supply, for example, an image signal corresponding to each color component of three primary colors of R, G, and B. The image signal supply means 201 and 202 reproduce an image signal on the basis of data which is read out from, for example, an internal recording medium, such as a hard disk device, of the PC 20, or an external recording medium exemplified by data recording media such as a digital versatile disk (DVD), and supply the reproduced image signal. The image signal is, for example, an image signal indicating an image of a document file exemplified by a material for presentation or an image exemplified by a moving image or a still image, but an image indicated by the image signal particularly does not matter. The image signal supply means 201 is realized by the CPU 21, the storage unit 27 and the interface 28. The image signal supply means 202 is realized by the CPU 21, the storage unit 27 and the interface 29.

In the projector 10-1, the image signal input means 101-1 supplies an image signal indicating an input image, input from the PC 20, to the projection means 102-1. In the projector 10-2, the image signal input means 101-2 supplies an image signal indicating an input image, input from the PC 20, to the projection means 102-2. The image signal input means 101-1 and 101-2 are realized by, for example, the CPU 11, the image processing unit 15 and the interface 18.

The projection means 102-1 is means for projecting the primary screen SC1 onto the screen 40 on the basis of the image signal supplied from the image signal input means 101-1. The projection means 102-2 is means for projecting the secondary screen SC2 onto the screen 40 on the basis of the image signal supplied from the image signal input means 101-2. The projection means 102-1 and 102-2 are realized by, for example, the CPU 11, the image processing unit 15 and the projection unit 16.

The imaging means 103-1 captures an image of an imaging region including the primary screen SC1 of the screen 40 in a predetermined period, generates image data indicating the captured image (hereinafter, referred to as "imaging data"), and supplies the generated data to the detection means 104-1. The imaging means 103-2 captures an image of an imaging region including the secondary screen SC2 of the screen 40 in a predetermined period, generates imaging data, and supplies the generated data to the detection means 104-2. The imaging period of the imaging means 103-1 and the imaging period of the imaging means 103-2 are, for example, equal to or higher than 50 Hz and equal to or lower than 60 Hz. In a case where the indicator 30 indicates a position on the screen 40, the imaging means 103-1 and 103-2 generate imaging data indicating a captured image including the indicator 30. The imaging means 103-1 and 103-2 are realized by, for example, the CPU 11, the image processing unit 15 and the camera unit 17.

The detection means 104-1 and 104-2 are means for repeatedly detecting the position of the indicator 30 indicating a position on the screen 40, and supplying coordinate information of the detected position. The detection means 104-1 and 104-2 analyze the imaging data supplied for each imaging period, and detect the position of the indicator 30, more specifically, the position of the tip of the indicator 30. In a case where the position of the indicator 30 is detected from the imaging data, the detection means 104-1 and 104-2 supply push information as coordinate information of the position. In addition, in a case where the indicator 30 moves to the outside of a display region, the detection means 104-1 and 104-2 supply pop information as coordinate information of a position at which the indicator 30 is not detected.

Meanwhile, each of the pieces of coordinate information which are supplied by the detection means 104-1 and 104-2 indicates coordinates of the coordinate system of the input images of the projectors 10-1 and 10-2. Therefore, the detection means 104-1 and 104-2 perform a process of converting the coordinate system of the coordinates obtained from the imaging data into the coordinate system of the input image, and then supply coordinate information. The detection means 104-1 and 104-2 are realized by, for example, the CPU 11 and the image processing unit 15.

The generation means 105-1 performs an interpolation process of interpolating the coordinate information on the basis of the coordinate information supplied by the detection means 104-1. The generation means 105-2 performs an interpolation process on the basis of the coordinate information supplied by the detection means 104-2. The generation means 105-1 and 105-2 are realized by, for example, the CPU 11 and the image processing unit 15.

Here, the details of the interpolation process executed in the projector 10-1 and the interpolation process executed in the projector 10-2 will be described. Hereinafter, as shown in Fig. 11(a), a description is given by taking an example of an interpolation process in which a straight line in a horizontal direction across the primary screen SC1 and the secondary screen SC2 is drawn by the user U, using the indicator 30.

### <Interpolation Process of Projector 10-1>

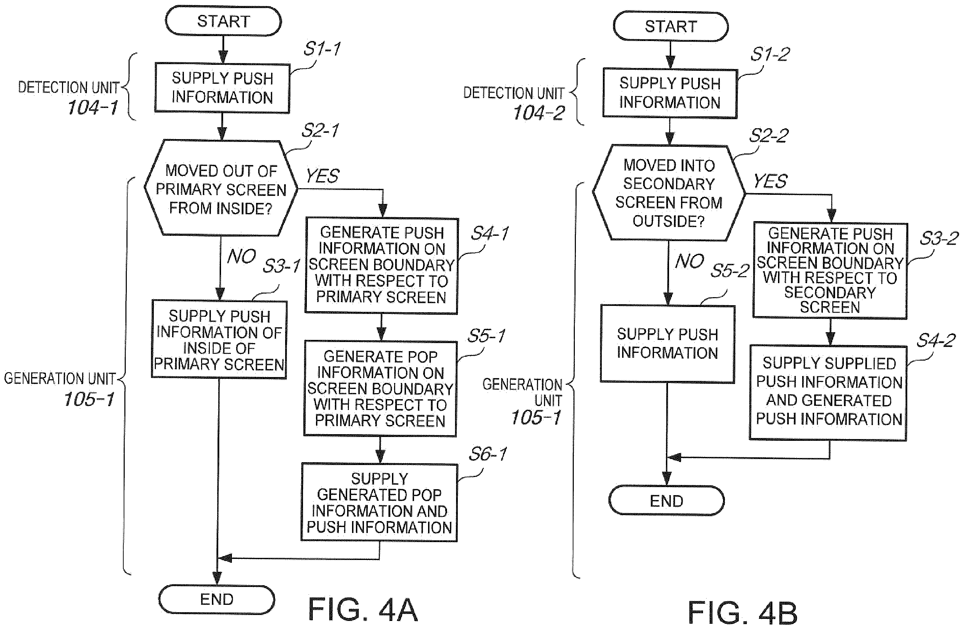

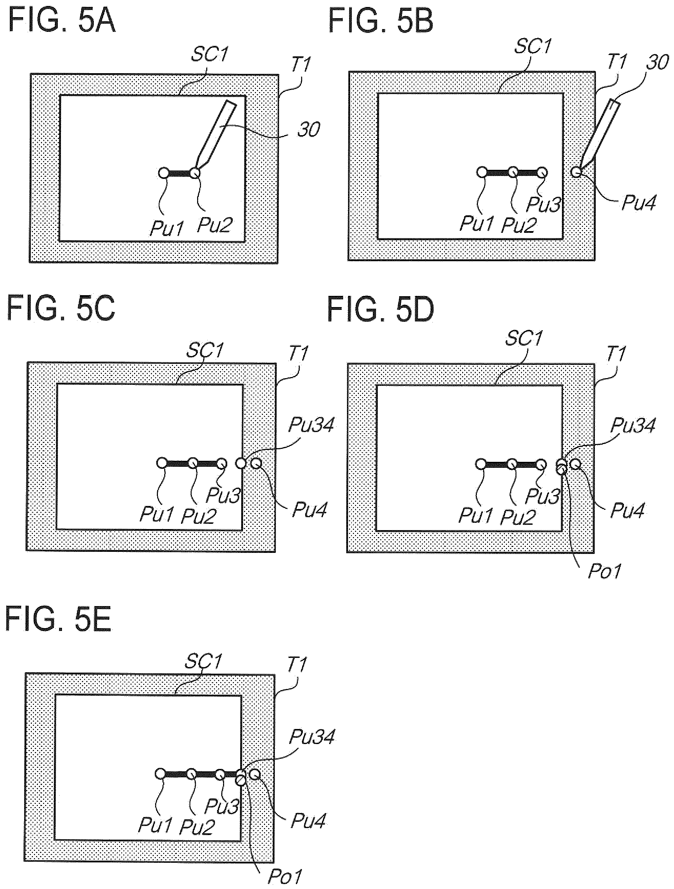

Fig. 4(a) is a flow diagram illustrating an interpolation process relating to the primary screen SC1 which is executed in the projector 10-1. Figs. 5(a) to 5(e) are diagrams illustrating the interpolation process relating to the primary screen SC1. Figs. 5(a) to 5(e) show a line drawn by linking positions indicated by push information, for convenience of description. In addition, in Figs. 5(a) to 5(e), the imaging region of the imaging means 103-1 is denoted by T1.

When the position of the indicator 30 is detected within the primary screen SC1, the detection means 104-1 supplies push information of the detected position to the generation means 105-1 (step S1-1). The generation means 105-1 determines whether the indicator 30 (that is, position indicated by the indicator 30) has moved from the inside of the primary screen SC1 to the outside of the primary screen SC1, on the basis of the supplied push information (step S2-1). The movement of the indicator 30 to the outside of the primary screen SC1, herein, refers to the movement of the indicator 30 to the inside of the secondary screen SC2.

As shown in Fig. 5(a), in a case where the detection means 104-1 continuously supplies pieces of push information Pu1 and Pu2 within the primary screen SC1, the generation means 105-1 determines "NO" in step S2-1, and passes the supplied push information to supply the information to the output means 106-1 (step S3-1).

Subsequently, as shown in Fig. 5(b), it is assumed that the detection means 104-1 continuously supplies pieces of push information Pu3 and Pu4. In this case, the detection means 104-1 supplies the push information Pu3 to the output means 106-1 in step S3-1, and then determines that the indicator 30 has moved from the inside of the primary screen SC1 to the outside of the primary screen SC1 (step S2-1; YES). As shown in Fig. 5(b), the imaging region T1 is a region wider than the primary screen SC1. Therefore, the detection means 104-1 can supply push information of a position located outside the primary screen SC1.

The imaging region T1 is set so as to be capable of supplying push information outside the primary screen SC1, for example, regardless of the moving speed of the indicator 30. The relative size of the imaging region T1 with respect to the primary screen SC1 may be adjusted on the basis of calculation, experiment or the like. According to the knowledge of the inventors, a region in which the primary screen SC1 is expanded approximately 10% in each direction suffices for the imaging region T1.

After "YES" is determined in step S2-1, the generation means 105-1 generates push information on the screen boundary of the primary screen SC1 (step S4-1). Here, the generation means 105-1 generates push information Pu34 at a position shown in Fig. 5(c). Specifically, the generation means 105-1 generates the push information Pu34 at a position (third position) where the screen boundary and a line segment that links a position (first position) indicated by the push information Pu3 to a position (second position) indicated by the push information Pu4 intersect each other.

Next, the generation means 105-1 generates pop information on the screen boundary of the primary screen SC1 (step S5-1). Here, the generation means 105-1 generates pop information Po1 at a position shown in Fig. 5(d). Specifically, the generation means 105-1 generates the pop information Po1 at the same position as the position at which the push information Pu34 is generated. In step S5-1, the generation means 105-1 deletes the pop information supplied from the detection means 104-1, and replaces this information with newly generated pop information. Through the process of step S5-1, at a position on the screen boundary of the primary screen SC1, the movement of the indicator 30 to the outside of the primary screen SC1 can be specified on the basis of the pop information Po1.

The generation means 105-1 supplies the push information generated in step S4-1 and the pop information generated in step S5-1 to the output means 106-1 (step S6-1). Since the push information Pu34 is generated on the screen boundary, as shown in Fig. 5(e), a line drawn by linking positions indicated by the push information arrives up to the screen boundary of the primary screen SC1.

### <Interpolation Process of Projector 10-2>

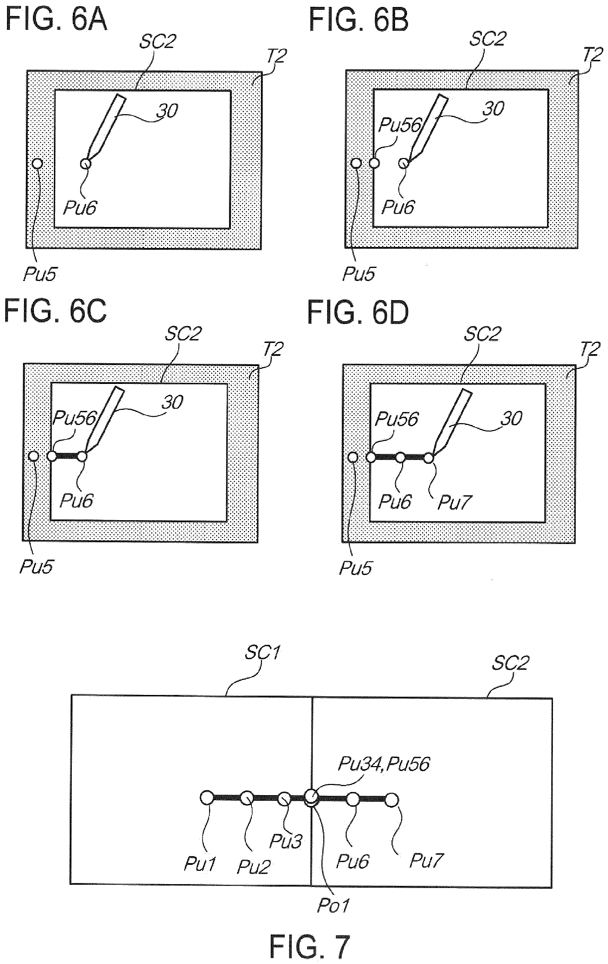

Fig. 4(b) is a flow diagram illustrating an interpolation process relating to the secondary screen SC2 executed in the projector 10-2. Figs. 6(a) to 6(d) are diagrams illustrating the interpolation process relating to the secondary screen SC2. Figs. 6(a) to 6(d) show a line drawn by linking positions indicated by push information, for convenience of description. In addition, in Figs. 6(a) to 6(d), the imaging region of the imaging means 103-2 is denoted by T2. The imaging region T2 is set on the basis of the same viewpoint as that of the imaging region T1.

When the position of the indicator 30 is detected, the detection means 104-2 supplies push information of the detected position to the generation means 105-2 (step S1-2). The generation means 105-2 determines whether the indicator 30 has moved from the outside of the secondary screen SC2 to the inside of the primary screen SC1, on the basis of the supplied push information (step S2-2). The movement of the indicator 30 to the inside of the secondary screen SC2, herein, refers to the movement of the indicator 30 from the inside of the primary screen SC1 to the inside of the secondary screen SC2.

As shown in Fig. 6(a), it is assumed that the detection means 104-2 continuously supplies pieces of push information Pu5 and Pu6. The push information Pu5 indicates, for example, the same position as the push information Pu4, but may indicate a different position. Here, the generation means 105-2 determines "YES" in step S2-2.

Meanwhile, as shown in Fig. 6(a), since the imaging region T2 is a region wider than the secondary screen SC2, the detection means 104-2 can supply push information outside the secondary screen SC2.

In a case where "YES" is determined in step S2-2, the generation means 105-2 generates push information on the screen boundary of the secondary screen SC2 (step S3-2). Here, the generation means 105-2 generates push information Pu56 at a position shown in Fig. 6(b). Specifically, the generation means 105-2 generates the push information Pu56 at a position (third position) where the screen boundary and a line segment that links a position (first position) indicated by the push information Pu5 to a position (second position) indicated by the push information Pu6 intersect each other.

Next, the generation means 105-2 supplies the push information supplied in step S1-2 and the push information generated in step S3-2 to the output means 106-2 (step S4-2). As shown in Fig. 6(c), since the push information Pu56 is generated on the screen boundary, a line is drawn which extends from a position indicated by the push information Pu56 on the screen boundary of the secondary screen SC2 to a position indicated by the push information Pu6 within the secondary screen SC2.

In step S2-2, in a case where the indicator 30 does not move from the outside of the secondary screen SC2 to the inside of the secondary screen SC2, that is, it is determined that the indicator 30 moves to the inside of the secondary screen SC2 (step S2-2; NO), the generation means 105-2 passes the push information supplied in step S1-2, and supplies the information to the output means 106-1 (step S5-2). As shown in Fig. 6(d), in a case where the detection means 104-2 supplies push information Pu7 subsequently to the push information Pu6, the generation means 105-2 supplies the push information Pu7 to the output means 106-1.

The above is the description of the interpolation process executed in the projector 10-1 and the projector 10-2.

Referring back to Fig. 3, the output means 106-1 outputs the coordinate information generated by the generation means 105-1 to the PC 20. The output means 106-2 outputs the coordinate information generated by the generation means 105-2 to the PC 20. The output means 106-1 and 106-2 are realized by, for example, the CPU 11 and the interface 18.

Meanwhile, in the present embodiment, the generation means 105-1 executes a function of passing the push information supplied from the detection means 104-1 to the output means 106-1, but the coordinate information may be supplied from the detection means 104-1 to the output means 106-1 without going through the generation means 105-1. Likewise, the coordinate information may be supplied from the detection means 104-2 to the output means 106-2 without going through the generation means 105-2.

In the PC 20, the detection means 203 is means for repeatedly detecting a position indicated by the indicator 30, and supplying coordinate information of the detected position. Specifically, the detection means 203 detects a position indicated by the coordinate information by the coordinate information output by the output means 106-1 and 106-2 being input. The detection means 203 supplies the coordinate information of the detected position to the conversion means 204. The detection means 203 is realized by the CPU 21 and the interfaces 28 and 29.

The conversion means 204 is means for performing conversion into operation information on the basis of the coordinate information supplied from the detection means 203. The conversion means 204 performs conversion into operation information which is allocated a human interface device (HID) device class specified by, for example, a universal serial bus (USB) standard. This operation information is a command described in a form capable of being construed by the HID. The conversion means 204 supplies the converted operation information to the execution means 205. The conversion means 204 is realized by executing, for example, a dedicated device driver.

The execution means 205 is means for executing a predetermined process on the basis of the operation information supplied from the conversion means 204. The execution means 205 performs a drawing process of drawing characters or figures handwritten by the user U at a position specified by operation information on an image indicated by an image signal which is supplied by the image signal supply means 201 and 202. The execution means 205 supplies an image signal after the drawing process to the image signal supply means 201 and 202 and the display means 206. The execution means 205 is realized by executing, for example, a dedicated device driver.

The display means 206 is means for displaying an image on the basis of the image signal supplied from the execution means 205. The image displayed by the display means 206 is observed by a user (user U or other users) who operates the PC 20. The display means 206 is realized by the cooperation of the CPU 11 and the display unit 26.

Fig. 7 is a diagram illustrating the screen region SC which is displayed in accordance with the interpolation process described in Figs. 5(a) to 6(d). As shown in Fig. 7, since the push information Pu34 is generated on the primary screen SC1, and the push information Pu56 is further generated on the secondary screen SC2, a line extending across the screen boundary between the primary screen SC1 and the secondary screen SC2 is displayed without being interrupted.

In the above description of the projection system 1, a case has been described in which a line extending from the primary screen SC1 across the secondary screen SC2 is drawn. However, even in a case where a line extending from the secondary screen SC2 across the primary screen SC1 is drawn, the interpolation process is performed, and thus a line extending across the screen boundary is displayed without being interrupted. In addition, even in a case where the indicator 30 moves from the primary screen SC1 or the secondary screen SC2 to the outside of the screen region SC, the interpolation process is performed, and thus the occurrence of a defect of a line not being drawn in the vicinity of the screen boundary of the screen region SC is eliminated.

Further, according to the projection system 1, a defect of processes other than the drawing process may also be eliminated. For example, a case is considered in which the user U performs a drag operation for moving an operable object such as an icon across the primary screen SC1 and the secondary screen SC2. This drag operation is an operation for moving the indicator 30 in a state where the indicator is brought into contact with an object on the screen 40.

In this case, after the object moves up to the screen boundary of the primary screen SC1, the PC 20 recognizes that the object is temporarily dropped on the basis of the pop information, but recognizes that the object is selected again on the basis of the push information generated on the screen boundary of the secondary screen SC2, and receives a drag operation again. Therefore, the user U can perform the drag operation for moving the object across the screen boundary without a sense of discomfort. That is, the pop information is generated on the screen boundary by the projector 10-1, and thus a defect of a process based on the pop information is also eliminated.

### [Second Embodiment]

Next, a second embodiment of the invention will be described.

The projection system 1 of the present embodiment is different from that in the aforementioned first embodiment, in that the PC 20 rather than the projectors 10-1 and 10-2 performs an interpolation process. Therefore, the projectors 10-1 and 10-2 of the present embodiment may detect the position of the indicator 30, using the same algorithm as that of a projector having a configuration of the related art. Hereinafter, the same components or functions as those in the aforementioned first embodiment are denoted by the same reference numerals and signs as those in the aforementioned first embodiment. In addition, the entire configuration and the hardware configuration of the projection system 1 of the present embodiment may be the same as those in the aforementioned first embodiment, and thus the description thereof will not be given.

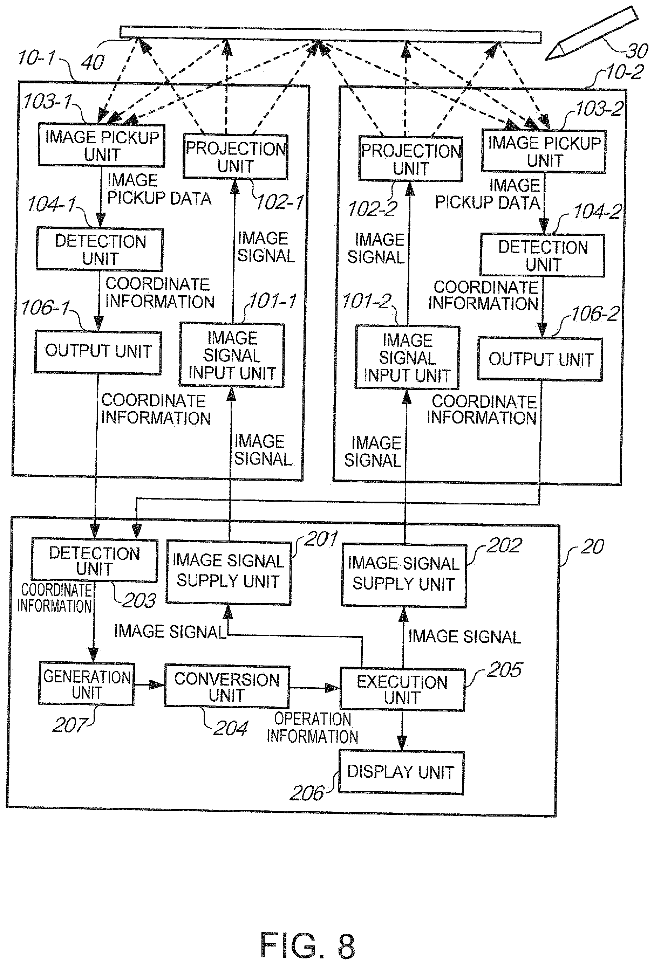

Fig. 8 is a block diagram illustrating a functional configuration of the projection system of the present embodiment. The functions of the projectors 10-1 and 10-2 of the present embodiment are the same as those in the aforementioned first embodiment, except that the generation means 105-1 and 105-2 are not included. That is, the output means 106-1 outputs the coordinate information supplied by the detection means 104-1 to the PC 20. The output means 106-2 outputs the coordinate information supplied by the detection means 104-2 to the PC 20.

The PC 20 includes generation means 207 in addition to the functions described in the aforementioned first embodiment.

In PC 20, the detection means 203 is means for repeatedly detecting a position indicated by the indicator 30 on the basis of each of the pieces of coordinate information which are input from the output means 106-1 and the output means 106-2, and supplying coordinate information of the detected position to the generation means 207.

The generation means 207 performs an interpolation process on the basis of the coordinate information supplied by the detection means 203. The generation means 207 is realized by, for example, the CPU 21 and the image processing unit 25.

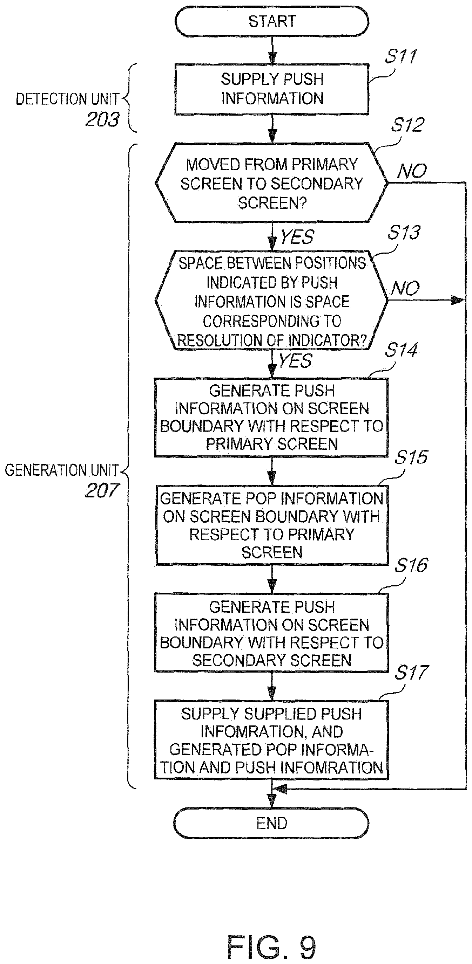

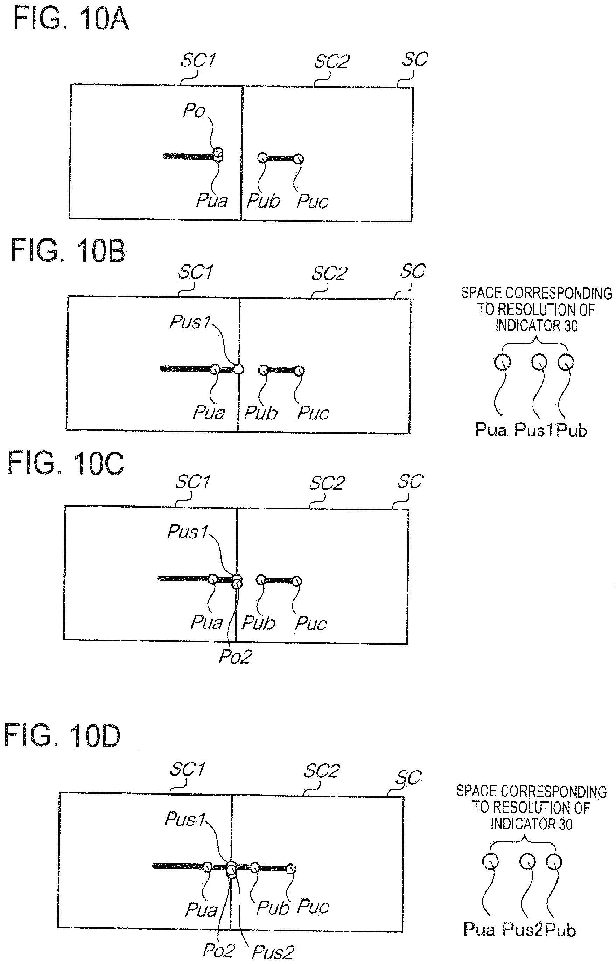

Fig. 9 is a flow diagram illustrating an interpolation process executed in the PC 20. Figs. 10(a) to 10(d) are diagrams illustrating the interpolation process. Hereinafter, as shown in Fig. 11(a), a description is given by taking an example of a process in which a straight line in a horizontal direction across the primary screen SC1 and the secondary screen SC2 is drawn by the user U, using the indicator 30. Figs. 10(a) to 10(d) show a line drawn by linking positions indicated by push information, for convenience of description. In addition, in the present embodiment, the imaging region of the imaging means 103-1 may be a region equal to the primary screen SC1. In addition, the imaging region of the imaging means 103-2 may be a region equal to the secondary screen SC2.

When the position of the indicator 30 is detected, the detection means 203 supplies push information of the detected position to the generation means 207 (step S11). The generation means 207 determines whether the indicator 30 has moved from the primary screen SC1 to the secondary screen SC2, on the basis of the supplied push information (step S12).

As shown in Fig. 10(a), a case is considered in which the detection means 203 detects push information Pua, pop information Po and pieces of push information Pub and Puc in order. The push information Pua indicates a position detected within the primary screen SC1. The pop information Po is pop information supplied by the indicator 30 moving to the outside of the primary screen SC1. The pieces of push information Pub and Puc indicate positions detected within the secondary screen SC2. The generation means 207 determines "YES" in the process of step S12, for example, in a case where the push information of the secondary screen SC2 is supplied subsequently to the push information of the primary screen SC1 being supplied.

When "YES" is determined in the process of step S12, the generation means 207 determines whether an interval between positions indicated by two pieces of push information specifying movement from the primary screen SC1 to the secondary screen SC2 is an interval based on the resolution (for example, imaging period) of the imaging means 103-1 and 103-2 (step S13). In a case where a continuous line is drawn by the indicator 30, an interval between the position indicated by the push information Pua and the position indicated by the push information Pub is supposed to fall within a range of a predetermined distance based on the resolution of the imaging means 103-1 and 103-2.

In a case where it is determined that the interval between the position indicated by the push information Pua and the position indicated by the push information Pub is an interval based on the resolution of the imaging means 103-1 and 103-2 (step S13; YES), the generation means 207 generates push information on the screen boundary of the primary screen SC1 (step S14). Here, the generation means 207 generates push information Pus1 shown in Fig. 10(b). Specifically, the generation means 207 generates the push information Pus1 at a position (third position) where the screen boundary and a line segment that links the position (first position) indicated by the push information Pua to the position (second position) indicated by the push information Pub intersect each other. The intention of generating this push information is the same as that in step S4-1 of the aforementioned first embodiment.

Next, the generation means 207 generates pop information on the screen boundary of the primary screen SC1 (step S15). Here, the generation means 207 generates pop information Po2 at a position of the screen boundary shown in Fig. 10(c). The generation means 207 generates the pop information Po2 at the same position as the position indicated by the push information Pus1. In step S15, the generation means 207 deletes the pop information supplied from the detection means 203, and replaces the information with newly generated pop information. The intention of generating this pop information is the same as that in step S5-1 of the aforementioned first embodiment.

Next, the generation means 207 generates push information on the screen boundary of the secondary screen SC2 (step S16). Here, the generation means 207 generates push information Pus2 at a position on the screen boundary shown in Fig. 10(d). Specifically, the generation means 207 generates the push information Pus2 at a position (third position) where the screen boundary and a line segment that links the position (first position) indicated by the push information Pua and the position (second position) indicated by the push information Pub intersect each other. The intention of generating this push information is the same as that in step S3-2 of the aforementioned first embodiment.

The generation means 207 supplies the push information supplied from the detection means 203 and the push information and the pop information generated by the generation means 207 to the conversion means 204 (step S17). Functions executed by the conversion means 204 and the execution means 205 are the same as those in the aforementioned embodiment, and thus the description thereof will not be given.

Meanwhile, in the present embodiment, the generation means 207 executes a function of passing the push information supplied from the detection means 203, but coordinate information may be supplied from the detection means 203 to the conversion means 204 without going through the generation means 207.

According to the projection system 1 of the second embodiment described above, even in a case where the projectors 10-1 and 10-2 do not have a function of performing an interpolation process, it is possible to eliminate a defect of a process similarly to the aforementioned first embodiment. Thus, an application program for realizing the generation means 207 is installed on the PC 20 in a state where the projectors 10-1 and 10-2 are configured as projectors having a configuration of the related art, and thus it is also possible to eliminate a defect of a process similarly to the aforementioned first embodiment.

Further, according to the projection system 1 of the present embodiment, the imaging regions of the projectors 10-1 and 10-2 may not be made larger than the display region of a projected image.

### [Modification Examples]

The invention can be carried out in different forms from those in the aforementioned embodiment. In addition, respective modification examples shown below may be appropriately combined.

In the projection system 1 of each of the aforementioned embodiments, two display regions are displayed and one screen region SC is displayed using two projectors, but three or more display regions may be displayed and one screen region may be displayed using three or more projectors. In the interpolation process in this case, a process may be performed in which one of two display regions next to each other is estimated as the primary screen of the aforementioned first embodiment, and the other is estimated as the secondary screen of the aforementioned first embodiment.

In addition, in the invention, a plurality of display regions may be arranged in a vertical direction or other directions without being arranged in a horizontal direction.

Further, even in a case where one display region is displayed using one projector, a defect of a process is eliminated by an action described in each of the aforementioned embodiments. As can be seen from Figs. 5(e) or 6(d), since a line is displayed by a drawing process up to a position closer to the screen boundary by the interpolation process being performed, a drawn line is not interrupted as compared with a case where the interpolation process is not performed.

In the projection system 1 of each of the aforementioned embodiments, the push information is generated on the screen boundary in the interpolation process, but the push information may be generated at a position between the first position indicated by one piece of push information and the second position indicated by one piece of push information supplied thereafter. In this case, even in a case where a line does not arrive on the screen boundary, the interruption of a line is not likely to be conspicuous as compared with a case where the interpolation process is not performed.

In the projection system 1 of each of the aforementioned embodiments, the movement of the indicator 30 across the inside and outside of the display region is detected on the basis of two pieces of imaging data of which the imaging times are consecutive. Without being limited to this example, in the projection system 1, the movement of the indicator 30 across the inside and outside of the display region may be detected on the basis of a plurality of pieces of imaging data of which the imaging times are not consecutive.

In the projection system 1 of the aforementioned second embodiment, as is the case with the aforementioned first embodiment, the imaging regions of the projectors 10-1 and 10-2 may be made wider than the display region of an image to be projected. In this case, the same interpolation process as those in the projectors 10-1 and 10-2 is executed by the CPU 21 of the PC 20.

Some of the components or operations of the projection system 1 of each of the aforementioned embodiments may be omitted. For example, the generation of the pop information in the interpolation process may be omitted in a case where a defect of a process based on the pop information does not occur, or the like. In addition, in the projection system 1 of each of the aforementioned embodiments, the push information is generated on each of the primary screen SC1 and the secondary screen SC2 in the interpolation process. In a case where a defect does not occur in a process such as the drawing process, the push information may be generated on either the primary screen SC1 or the secondary screen SC2 in the projection system 1. In addition, the drawing process based on the generated push information or pop information may be performed by the projectors 10-1 and 10-2.

A method for causing the projectors 10-1 and 10-2 to detect a position indicated by the indicator 30 may not be a method of using the imaging means. For example, insofar as a function of outputting information based on a position detected by the indicator 30 is included by the adoption or the like of a technique such as a touch panel or a light curtain, the projectors 10-1 and 10-2 may not include the imaging means.

In addition, the projectors 10-1 and 10-2 may acquire imaging data from external imaging means, and detect the position of the indicator 30.

The PC 20 may be replaced by information processing devices other than a PC, such as a smartphone or a tablet-type computer, which have an information processing function.

The projectors 10-1 and 10-2 are not limited to devices including a plurality of liquid crystal panels (light valves) corresponding to each color component of three primary colors. The projectors 10-1 and 10-2 may include a single liquid crystal panel. In this case, a color corresponding to each pixel is set using an optical filter or the like. In addition, the liquid crystal panel may be a reflection type without being limited to a transmission type. In addition, the projectors 10-1 and 10-2 are not limited to a liquid crystal-type projector, and may be a projector using, for example, a digital mirror device (DMD), a liquid crystal on silicon (LCOS), or the like.

In the aforementioned embodiment, each function realized by the projectors 10-1 and 10-2 or the PC 20 can be realized by a combination of a plurality of programs, or realized by connection of a plurality of hardware resources. In a case where the functions (for example, detection means 104-1 and generation means 105-1, detection means 104-2 and generation means 105-2) of the projectors 10-1 and 10-2, or the functions (for example, detection means 203 and generation means 207) of the PC 20 are realized using a program, this program may be provided in a state where the program is stored in a computer readable recording medium such as a magnetic recording medium (such as a magnetic tape, a magnetic disc (hard disk drive (HDD), or flexible disk (FD))), an optical recording medium (such as an optical disc), a magnetooptical recording medium, or a semiconductor memory, and may be delivered through a network. In addition, the invention can also be ascertained as an information processing method.

### Reference Signs List

1: projection system, 10-1, 10-2: projector, 101-1, 101-2: image signal input means, 102-1, 102-2: projection means, 103-1, 103-2: imaging means, 104-1, 104-2: detection means, 105-1, 105-2: generation means, 106-1, 106-2: output means, 11, 21: CPU, 12, 22: ROM, 13, 23: RAM, 14, 24: operating unit, 15, 25: image processing unit, 16: projection unit, 17: camera unit, 18, 28, 29: interface, 201, 202: image signal supply means, 203: detection means, 204: conversion means, 205: execution means, 206: display means, 207: generation means, 26: display unit, 27: storage unit

## Claims

1. An information processing device comprising:
detection means for repeatedly detecting a position indicated by an indicator with respect to a projection screen onto which an image is projected, and supplying position information of the detected position; and
generation means for generating position information of a third position located between a first position located inside of a display region of the image in the projection screen and a second position located outside of the display region, in a case where the detection means detects the first position, and then detects the second position.

2. The information processing device according to claim 1, wherein the detection means detects the indicated position on the basis of image data obtained by capturing an image of an imaging region including the display region in a predetermined period, and the generation means specifies the first position and the second position on the basis of two pieces of the image data of which times of the imaging are different from each other by one period, and generates the position information of the third position.

3. The information processing device according to claim 1, wherein the detection means detects the indicated position on the basis of the image data obtained by capturing an image of the imaging region wider than the display region.

4. The information processing device according to claim 1, wherein the generation means generates information indicating that the indicator moves to an outside of the display region, in association with the third position.

5. The information processing device according to claim 1, wherein a first display region corresponding to a first image and a second display region corresponding to a second image are arranged in the projection screen, and
the generation means generates the position information of the third position, in a case where the first position is detected inside the first display region, and the second position is detected inside the second display region.

6. The information processing device according to claim 6, wherein the generation means deletes information indicating that the indicator moves to an outside of the first display region, when the information corresponds to movement from the first display region to the second display region in a case where the information is supplied by the detection means.

7. The information processing device according to claim 7, wherein the generation means generates information indicating that the indicator moves to the outside of the first display region in association with the third position, with respect to the first display region.

8. The information processing device according to claim 8, wherein the generation means generates the position information of the third position with respect to the second display region.

9. An information processing device comprising:
detection means for repeatedly detecting a position indicated by an indicator with respect to a projection screen onto which an image is projected, and supplying position information of the detected position; and
generation means for generating position information of a third position located between a first position located inside of a display region of the image and a second position located outside of the display region in the projection screen, in a case where the detection means detects the second position, and then detects the first position.

10. The information processing device according to claim 9, wherein the detection means detects the indicated position on the basis of image data obtained by capturing an image of an imaging region including the display region in a predetermined period, and
the generation means specifies the first position and the second position on the basis of two pieces of the image data of which times of the imaging are different from each other by one period, and generates the position information of the third position.

11. The information processing device according to claim 9, wherein the detection means detects the indicated position on the basis of the image data obtained by capturing an image of the imaging region wider than the display region.

12. A projector comprising:
projection means for projecting an image onto a projection screen;
detection means for repeatedly detecting a position indicated by an indicator with respect to the projection screen, and supplying position information of the detected position;
generation means for generating position information of a third position located between a first position located inside of a display region of the image in the projection screen and a second position located outside of the display region, in a case where the detection means detects the first position, and then detects the second position; and
output means for outputting the position information supplied by the detection means and the position information generated by the generation means.

13. A projector comprising:
projection means for projecting an image onto a projection screen;
detection means for repeatedly detecting a position indicated by an indicator with respect to the projection screen, and supplying position information of the detected position;
generation means for generating position information of a third position located between a first position located inside of a display region of the image and a second position located outside of the display region in the projection screen, in a case where the detection means detects the second position, and then detects the first position; and
output means for outputting the position information supplied by the detection means and the position information generated by the generation means.

14. An information processing method comprising:
a step of repeatedly detecting a position indicated by an indicator with respect to a projection screen onto which an image is projected, and supplying position information of the detected position; and
a step of generating position information of a third position located between a first position located inside of a display region of the image in the projection screen and a second position located outside of the display region, in a case where the first position is detected, and then the second position is detected.

15. An information processing method comprising:
a step of repeatedly detecting a position indicated by an indicator with respect to a projection screen onto which an image is projected, and supplying position information of the detected position; and
a step of generating position information of a third position located between a first position located inside of a display region of the image and a second position located outside of the display region in the projection screen, in a case where the second position is detected, and then the first position is detected.

## Amended claims

### Amended claims under Art. 19.1 PCT

**1.** An information processing device comprising:
detection means for repeatedly detecting a position indicated by an indicator with respect to a projection screen onto which an image is projected, and supplying position information of the detected position; and
generation means for generating position information of a third position located between a first position located inside of a display region of the image in the projection screen and a second position located outside of the display region, in a case where the detection means detects the first position, and then detects the second position.

**2.** The information processing device according to claim 1, wherein the detection means detects the indicated position on the basis of image data obtained by capturing an image of an imaging region including the display region in a predetermined period, and
the generation means specifies the first position and the second position on the basis of two pieces of the image data of which times of the imaging are different from each other by one period, and generates the position information of the third position.

**3.** (Amended)
The information processing device according to claim 2, wherein the detection means detects the indicated position on the basis of the image data obtained by capturing an image of the imaging region wider than the display region.

**4.** The information processing device according to claim 1, wherein the generation means generates information indicating that the indicator moves to an outside of the display region, in association with the third position.

**5.** The information processing device according to claim 1, wherein a first display region corresponding to a first image and a second display region corresponding to a second image are arranged in the projection screen, and
the generation means generates the position information of the third position, in a case where the first position is detected inside the first display region, and the second position is detected inside the second display region.

**6.** (Amended)
The information processing device according to claim 5, wherein the generation means deletes information indicating that the indicator moves to an outside of the first display region, when the information corresponds to movement from the first display region to the second display region in a case where the information is supplied by the detection means.

**7.** (Amended)
The information processing device according to claim 6, wherein the generation means generates information indicating that the indicator moves to the outside of the first display region in association with the third position, with respect to the first display region.

**8.** (Amended)
The information processing device according to claim 7, wherein the generation means generates the position information of the third position with respect to the second display region.

**9.** An information processing device comprising:
detection means for repeatedly detecting a position indicated by an indicator with respect to a projection screen onto which an image is projected, and supplying position information of the detected position; and
generation means for generating position information of a third position located between a first position located inside of a display region of the image and a second position located outside of the display region in the projection screen, in a case where the detection means detects the second position, and then detects the first position.

**10.** The information processing device according to claim 9, wherein the detection means detects the indicated position on the basis of image data obtained by capturing an image of an imaging region including the display region in a predetermined period, and
the generation means specifies the first position and the second position on the basis of two pieces of the image data of which times of the imaging are different from each other by one period, and generates the position information of the third position.

**11.** The information processing device according to claim 9, wherein the detection means detects the indicated position on the basis of the image data obtained by capturing an image of the imaging region wider than the display region.

**12.** A projector comprising:
projection means for projecting an image onto a projection screen;
detection means for repeatedly detecting a position indicated by an indicator with respect to the projection screen, and supplying position information of the detected position;
generation means for generating position information of a third position located between a first position located inside of a display region of the image in the projection screen and a second position located outside of the display region, in a case where the detection means detects the first position, and then detects the second position; and
output means for outputting the position information supplied by the detection means and the position information generated by the generation means.

**13.** A projector comprising:
projection means for projecting an image onto a projection screen;
detection means for repeatedly detecting a position indicated by an indicator with respect to the projection screen, and supplying position information of the detected position;
generation means for generating position information of a third position located between a first position located inside of a display region of the image and a second position located outside of the display region in the projection screen, in a case where the detection means detects the second position, and then detects the first position; and
output means for outputting the position information supplied by the detection means and the position information generated by the generation means.

**14.** An information processing method comprising:
a step of repeatedly detecting a position indicated by an indicator with respect to a projection screen onto which an image is projected, and supplying position information of the detected position; and
a step of generating position information of a third position located between a first position located inside of a display region of the image in the projection screen and a second position located outside of the display region, in a case where the first position is detected, and then the second position is detected.

**15.** An information processing method comprising:
a step of repeatedly detecting a position indicated by an indicator with respect to a projection screen onto which an image is projected, and supplying position information of the detected position; and
a step of generating position information of a third position located between a first position located inside of a display region of the image and a second position located outside of the display region in the projection screen, in a case where the second position is detected, and then the first position is detected.

Statement under Art. 19.1 PCT
The claim recited in amended claim 3 is amended from claim 1 to claim 2.

The claim recited in amended claim 6 is amended from claim 6 to claim 5.

The claim recited in amended claim 7 is amended from claim 7 to claim 6.

The claim recited in amended claim 8 is amended from claim 8 to claim 7.

Amended claims 1, 2, 4, 5 and 9 to 15 correspond to claims 1, 2, 4, 5 and 9 to 15 before amendment.
